# EUROPEAN PATENT APPLICATION

(11) **EP 2 497 725 A1**
(43) Date of publication of application: **12.09.2012**
(21) Application number: 11157455.4
(22) Date of filing: 09.03.2011
(51) Int. Cl.: B65G 1/00, B65G 57/00

(54) **Pallet saver**

(71) Applicant: Deutsche Post AG, 53113 Bonn (DE)
(72) Inventor: Santiago, Blasco, 50019 Valdespartera, Zaragoza (ES); Serrano, Javier, Parla 28980 (ES)
(74) Representative: Jostarndt, Hans-Dieter

(57) **Abstract**

The invention relates to a supporting tool (1) enabling removal of pallets from a stack of loaded pallets, where the supporting tool (1) comprising a frame (3) movable between a first position (31) and a second position (32), where the movable frame (3) is suitably shaped and mounted to enable the stacking (S) of the second pallet (2) loaded with second objects (22) on top of first objects (21) in the first position (31) and to at least partly enclose the second objects (22) in the second position (32) suitable to deposit (D) the second objects (22) on top of the first objects (21) during removal (R) of the second pallet (2) from its position between the first and second objects (21, 22). The invention further relates to a pallet removal system comprising at least one supporting tool (1) and at least one pallet remover (8) and a method to operate the pallet removal system and the supporting tool (1).

## Description

### Filed of the invention

The invention relates to a supporting tool enabling removal of pallets from a stack of loaded pallets, a pallet removal system comprising at least one supporting tool and at least one pallet remover and a method to operate the pallet removal system and the supporting tool.

### Background of the invention

Logistic providers commonly transport goods (or objects) on pallets. The pallets have a minimum height to enable forklift transport, which is in the order of 150 mm (e.g. EUR-pallets with a height of 144 mm). During transport goods loaded on pallets may be stored for an intermediate time in depots or warehouses. In order to save storage space, these loaded pallets are stacked on each other. Stacking denotes the deposition of a loaded pallet on top of goods underneath, which may be also loaded on top of a pallet. During storage, the pallets cannot be used for carrying other goods (or objects) and the pallets consume storage space due to its height. In order to save resources and further storage space, there is a demand to remove the pallets out of the stack to use these pallets for carrying goods during other transports and to minimize the height of the stack of stored goods in order to provide additional space for stacking additional goods on top of the other goods already stacked. A manual stacking of goods in order to de-load a pallet is not preferred. Goods might by heavy, eventually have a large size and manual handling requires too much time and resources and may risk the health of workers.

To avoid the necessity to remove such thick pallets from stacked goods, socalled thin slip-sheets carrying goods are applied as disclosed in EP 0125 134 B1 To be able to handle such slip sheets loaded with goods (or objects), forklifts require additional push-pull slip-sheet handling tools mounted to the forklift. However, this system is not applicable to commonly used pallets such as EUR-pallets. To benefit from slip sheets pallets, the goods arriving a storage area on common pallets have to be de-loaded from the common pallet and loaded onto the slip sheets first, which requires additional effort and time. Secondly, common forklifts have to be modified significantly in order to be able to handle slip sheets. There is a demand to provide a solution to remove common pallets from stacked pallets loaded with objects (or goods) in an effective, fast and safe way. Especially the device used for stacking the pallets should be usable as a pallet remover, e.g. a forklift, without requiring significant modifications compared to its standard operation modus (stacking and transportation).

### Summary of the invention

It is an object of the present invention to provide a supporting tool, a pallet removal system and a method to operate the supporting tool and pallet removal system enabling to remove common pallets from stacked pallets loaded with objects in an effective, fast and save way.

The object is solved by a supporting tool enabling removal of pallets from a stack of loaded pallets comprising a frame movable between a first position and a second position, where the movable frame is suitably shaped and mounted to enable the stacking of second pallet loaded with second objects on top of first objects in the first position and to at least partly enclose the second objects in the second position suitable to block the second objects from being removed together with the second pallet during removal of the second pallet from its position between the first and second objects and to deposit the second objects on top of the first objects during removal of the second pallet.

Objects denote any kind of item or goods loaded on top of pallets. The objects could be large sized objects, where only a single object is loaded on top of a pallet or might be objects of a size smaller than the loadable surface of a pallet, where multiple objects are loaded together on one pallet. Such objects might be stacked on top of each other when loaded on top of the pallet. Stacking denotes the deposition of a pallet or object (or goods) on top of each other in a vertical direction. A loaded pallet denotes a pallet carrying objects. Preferably the objects according to the present invention have a box-like shape with an essentially flat bottom surface facing towards the loading surface of the pallet. Other objects might be wrapped together to form an overall flat bottom surface considering all wrapped objects. The objects might also denote a packaging for carrying other goods (one or more goods) inside the objects. Second objects denote the objects loaded on top of the pallet, which will be removed after stacking this pallet loaded with object on top of objects already present. The already present objects are denoted as first objects. The first objects might be present on top of another pallet (in this case the first pallet) or might be placed on top of a floor, a sheet or any other suitable surface to place objects in a storage area.

The removal of a pallet (here the second pallet) denotes the process (pallet removal or removal), where a former loaded pallet is removed from its position between the first and second objects. The direction of the removal process (or removal direction) is an essentially horizontal direction, since the objects are stacked vertically and subsequently would hamper any non-horizontal removal of a pallet. After completing the removal process, the removed pallet carries no objects and the second objects former placed on top of the now removed pallet are deposited on top of the first objects. To improve a secure support for the second objects, the upper surface of the first objects should comprise at least partly an essentially flat and horizontal surface. This surface might be also provided by multiple first objects providing an overall essentially flat and horizontal surface. In a preferred embodiment, the first and second objects are rectangular boxes, more preferably having the same or similar sizes.

The frame enabling the removal of the second pallet denotes a defined (or established) solid border around an empty area. The part of the frame facing towards the area established by the frame is called as inner side of the frame having an inner shape. Correspondingly the opposite side of the frame is denoted as outer side of the frame having an outer shape. The inner side of the frame faces towards the second objects when being in the second position. The established solid border might be a contiguous border, e.g. a single piece frame, similar like the edge of a picture frame. The term "single piece" denotes a frame, where the sides of the frame have a fixed connection. It does not necessarily imply a frame made of a single piece material or a frame being made of only rigid material. In another embodiment the frame might also be established by frame parts not defining a contiguous border around the second objects when being in the second position or being made of a flexible material, which might be stretch in order to provide a defined inner side of the frame. Shape and size of the empty area is adapted to enclose the second objects at least partly when stacked on top of the first objects (with or without the second pallet in between). In an embodiment the frame has a shape adapted to the shape of the second pallet, which is commonly rectangular, or to the shape of at least the second objects. As an example, in case of first and second objects arranged in a rectangular area, the frame preferably has also at least a rectangular inner shape. In case of first and second objects arranged in a circular area or having a circular shape, the frame preferably has also at least a circular inner shape. The outer shape of the frame might be different to the inner shape, e.g. a frame with a rectangular inner shape has a circular outer shape. People skilled in the art are able to select a suitable shape (inner and/or outer shape) of the frame within the scope of this invention.

In order to stack the second pallet on top of the first objects, the frame has to be in a position not hampering the stacking. This position is any suitable first position. Preferably the first position is a position outside the volume to be occupied by the second objects and the second pallet. This position might be above this volume or might be behind the area occupied with first objects seen in a horizontal direction. In the latter case, the preferred first position is a vertical position of the frame.

During the removal of the second pallet, the second objects have to keep their position above the first objects in order to be deposited on top of the first objects after having removed the second pallet. Since to removal takes place in a certain direction, the frame has to block the movement of the second objects into the direction of removing the pallet in the second position of the frame. The side of the frame blocking the second objects during pallet removal is denoted as the front side of the frame. In case of second pallets, where the carrying surface of the second pallet is only partly covered with second objects, there is a gap between the second objects and at least the front side of frame when being in its second position. When starting the removal of the second pallet, the second objects might move with the second pallet into the removal direction until touching the blocking part of the frame (front side). The frame will prevent the second objects from further moving along the removal direction of the second pallet resulting in second objects dropping on top of the first objects after removal of the second pallet. In another embodiment the second position of the movable frame has an essentially horizontal position, because the removal direction is also essentially horizontal.

In case of a loading surface of the second pallet fully occupied with second objects, the second objects cannot follow the second pallet along the removal direction, since the frame is in contact to the outer second objects or there is only a small gap between frame and outer second objects. In case of a gap, the gap might be in the order of a few millimeters. However, the second objects loaded on top of the back area of the pallet with respect to the removal direction of the pallet will drop first on top of the first objects. The dropping of second objects on top of first objects will continue until the second pallet is completely removed and all second objects are deposited on top of the first objects. The placement of all the second objects on top of the first objects underneath is denoted as depositing the second objects on top of the first objects, while each single second object drops on top of one or more first objects.

The frame can be moved between the first and second positions by any suitable movement (vertical, horizontal, diagonal, pivoting movements or combinations thereof) and corresponding movement means enabling such movements. As an example, the frame might be fixed at a certain height above the area occupied by the first objects. The height has to be adapted to enable the loaded second pallet be stacked on top of the first objects. After that, the frame can be lowered to its second position. To enable such movement, the supporting tool for example can be mounted to the roof of the storage area or mounted to a wall moving the frame via a chains or ropes guided along a suitable assembly. In another example, the frame might be pivoted along a rotational axis between first and second position, where the rotational axis is arranged horizontally. In another example, the frame may comprise two separate parts, which are horizontally moved together in a height suitable to enclose the second objects on top of the second pallet previously stacked on top of the first objects. People skilled in the art may select other suitable movement means and corresponding movement directions to move the frame between the first and second position within the scope of this invention. The moving means might be manually operated or motor driven by motor means. The movement of the frame from the first to the second position might be motor driven by motor means. The movement might also be hydraulically damped.

To allow the frame being movable between the first and second positions, the supporting tools might by mounted to walls, roofs or other assemblies with sufficient robustness to carry the supporting tool. The supporting tool might be made of any suitable material able to block movements of second objects during pallet removal. In one embodiment, the supporting tool is made of metal such as Aluminum or made of plastic with sufficient robustness (e.g. hard plastic) to provide a supporting tool having a low weight.

In an embodiment at least the side of the frame, which blocks the second objects (also denotes as front side of the frame), is provided by a belt. Here the belt extends at least between the side parts of the frame establishing a closed frame, where the front side is flexible in case of a non-tightened belt. The non-tightened belt makes it very easy to move the frame into the second position not requiring side parts of the frame with any telescoping functionality. If the second position can only be reached by modifying the length of the frame, the belt can simply be expanded. Therefore the belt is preferably made of a flexible material, e.g. rubber. In a preferred embodiment the frame has a U-shape closed with the belt, wherein the frame comprises pulling means suitable to tighten the belt when the frame is in the second position. The belt might be tightened automatically when the frame reaches its second position or might be tightened on demand, either by hand or via a remote control. In case of automatically tighten the belt the frame comprises suitable pulling means such as an electrical winch, where the belt is fixed to. Such winches might be arranged on one side of the belt r on both sides of the belt. In a further improved embodiment, the belt will be automatically released after removal of the pallet. The status of a removed pallet might be signalized to the pulling means via a remote control.

In another embodiment the supporting tool comprises at least one essentially vertical framing on top of the frame preventing the second objects from falling beside the frame on at least one side during pallet removal. The vertical framing could be a sidewall, a fence, a railing or a mesh. In this invention the terms "essentially vertical" (or essentially horizontal) denotes an alignment, which may deviate from exactly vertical (or horizontal) by a few degrees. However the overall impression of being vertical (or horizontal) should be maintained. The vertical alignment of the framing may vary in the order of the thickness of the frame. However, the deviation of the alignment of the framing from an exactly vertical alignment should not decrease the empty area established by the frame preventing the enclosing frame touching the second objects with the inner side of the framing. The framing preferably has a vertical extension (height) adapted to the average (or expected) total height of the second objects loaded on top of the second pallet. During removal of the pallet, second objects stacked on top of each other might tilt to the outside area during dropping on top of the first objects. A framing will prevent these second objects from falling down beside the frame. Even the tilted second objects will be directed by the framing to be finally deposited on top of the first objects (or on top of the second objects underneath, which are deposited on top of the first objects.

In another embodiment the supporting tool comprises motor means in order to move the frame at least between the first and second positions. The motor means can carry out the frame movements faster compared to a manually moved frame. The movement might be hydraulically damped. Furthermore motor means provide the possibility to be operated by a remote control.

In another embodiment the supporting tool comprises initiating means to initiate the motor means to move the frame. The initiating means might be a connected mechanical or electrical switch to operate the motor means. In case of an applied remote control, the initializing means may comprise a receiver to receive the signal from the remote control and suitable means to further process the signal in order to start the motor means to move the frame.

In another embodiment the movable frame is pivotable along a rotational axis between the first and the second position, where the rotational axis is arranged outside the area occupied by the first objects in a suitable height. Here the position of the frame is easily defined by the position of the rotational axis and the size of the frame without requiring any additional measures to stabilize the movement as it would be necessary when moving the frame along chains or ropes mounted at the roof of the storage area. A pivotable frame is a mechanically robust embodiment for the supporting tool. Preferably the rotational axis is aligned essentially horizontally in order to achieve a frame with a horizontal second position. Not to hamper stacking of pallets, the rotational axis is arranged outside the volume vertically above the area occupied by the first objects.

In an embodiment the position of the rotational axis is adaptable to the height of the first objects applying height adapting means. The height of the first objects denotes the distance between the floor, where the first objects are placed on, and the uppermost surface of the first objects, which is the surface, where the second pallet is stacked on top. Such height adapting means might be mechanical adaptable means like a vertical rail, where the supporting tool is fixed to, or a motor driven telescoping means or any other suitable means moving the supporting tool upwards or downwards. People skilled in the art are able to provide a suitable adapting means within the scope of the present invention.

In another embodiment of the pivotable frame, the frame has a variable length perpendicular to the rotational axis with a first length in the first position and a second length adjustable in the second position with the first length being larger than the second length, preferably the second length is adjusted by an external force. The force might be applied via a forklift. The area enclosed by the pivotable frame needs to be larger than the size of the second pallet during moving the frame from the first to the second position. This size has to be even larger when used for second pallets loaded with objects defining a larger loading height. When reaching the second position, there is a gap between the inner side of the frame and the second objects which has to be closed before removing the pallet in order to prevent the second objects from falling beside the first objects. When applying a force to the frame, the variable length of the frame can be reduced until the inner side of the frame touches the second objects loaded on top of the second pallet. After the gap is closed, the second objects will be securely deposited on top of the first objects after removal of the pallet. If the second pallet is stacked on top of the first objects using a forklift, the forklift can simultaneously be used to apply the force to the frame to adjust the second length of the frame before removal of the pallet. In order to be able to block the second objects from moving along the removal direction, the lengths of the sides of the frame perpendicular to the rotational axis shall keep their second lengths. Therefore the second length is locked by suitable means, where the lock can be release by applying a suitable release means. Such means might be spring-loaded self-locking means, where the lock can be release be a suitable lever. The lever might be release via a remote control.

The invention further relates to a pallet removal system comprising at least one supporting tool as claimed in the present invention, which is mounted to suitable mounting means at the suitable height to enable the stacking of the second pallet loaded with second objects on top of first objects and at least one pallet remover suitable to remove the second pallet from its position between the first and the second objects. People skilled in the art are able to select suitable mounting means in order to adjust the supporting tool to e.g. a wall or a roof. The pallet remover might be any suitable tool to remove the second pallet out of the stacked objects. As an example, the pallet remover can be a forklift.

In another embodiment the pallet removal system comprises at least one remote control means suitable to send out a control signal to the supporting tool, where the supporting tool is adjusted to move the frame in response to the control signal. In an embodiment the initiating means receive the control signal and further process the signal to move the frame. In another embodiment the motor means itself receive the control signal and will move the frame accordingly. In a preferred embodiment the remote control means is a handheld device to be able to variably equip the workers or the related pallet remover assigned to the storage area, where pallets have to be removed out of stacked objects, with the remote control.

The invention further relates to a method to operate the pallet removing system as claimed in the present invention to remove a second pallet loaded with second objects stacked on top of first objects loaded on top of a first pallet while keeping the second objects above the first objects by applying a supporting tool as claimed in the present invention comprising the steps of:
- stacking the second pallet loaded with the second objects on top of the first objects;
- moving the frame into a second position to at least partly enclose the second objects with the frame;
- removing the second pallet from its position between the first and the second objects with a pallet remove, preferably the pallet remover is a forklift; and
- depositing the second objects on top of the first objects during removing the second pallet.

In an embodiment of the method the pallet remover is a forklift. In a preferred embodiment the forklift comprises fixation means in order to provide a tight fit between the forklift and the second pallet at least during removing the second pallet. Such fixation means might be a hook arranged at the front end of at least one of the forks of the forklift in order to be able to pull the pallet out of the stacked first and second objects. The fixation means might be needles facing upwards out of the carrying surface of at least one of the forks of the forklift in order to pull the pallet out of the stacked first and second objects. Alternatively, at least one of the upper sides of the forks might be equipped with a layer or coating or mat (e.g. made of rubber) providing a high friction force to the pallet to be able to pull the pallet out of the stacked first and second objects. In another embodiment, a hook connected to the forklift can be fixed to the pallet front side. Alternatively, the pallet remover is a forklift with forks having an adjustable distance between the forks. This distance can be adjusted after inserting the forks into the pallet in order to provide a clamping force to the pallet sufficient to pull the pallet out of the stacked first and second objects.

### Brief description of the drawings

These and other aspects of the invention will be apparent from and elucidated with reference to the embodiments described hereinafter.
Fig.1: an embodiment of the frame according to the present invention in (a) a top view, and (b) in a side view.
Fig.2: an embodiment of the removal process with the frame of the supporting tool in the second position (side view).
Fig.3: stacking of second pallet with second objects on top of first objects with another embodiment of the supporting tool with a pivotable frame in the first position (side view).
Fig.4: the supporting tool of figure 2 with the frame in the second position (side
   view).
Fig.5: removal process with stacked first and second objects and the supporting tool of figures 3 and 4 (side view).
Fig.6 another embodiment of a supporting tool with pivotable frame with
   height adapting means to adjust the height of the frame (side view).
Fig.7: another embodiment of the frame according to the present invention in (a) a top view, and (b) in a side view.

### Detailed description of embodiments

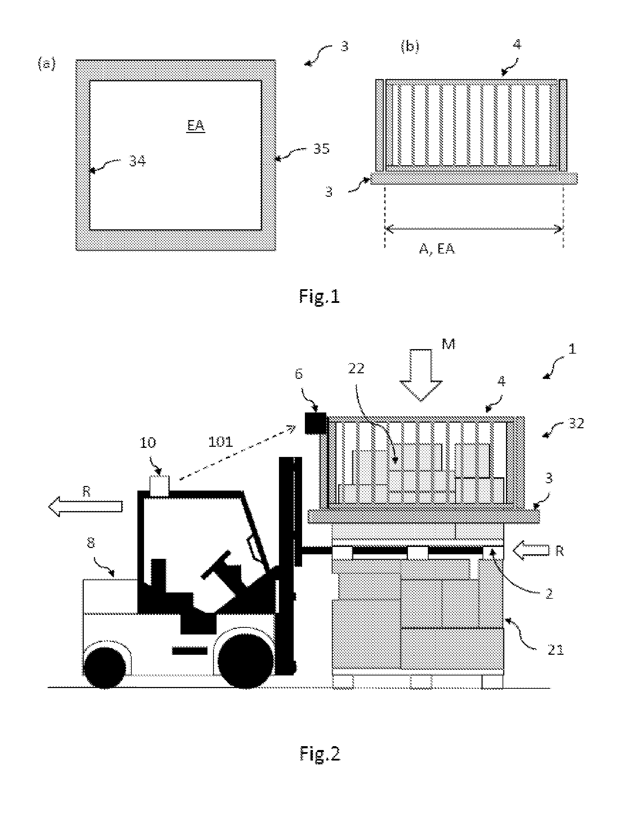

Fig.1 shows an embodiment of the frame 3 of the supporting tool according to the present invention in (a) a top view, and (b) in a side view. The frame 3 in fig. 1(a) has a rectangular shape adapted to the shape of corresponding rectangular pallets (not shown here). The shown frame 3 establishes a solid contiguous border as a single piece frame around an empty area EA. The inner side 34 of the frame faces towards the empty area EA. The empty area is dedicated to enclose second objects in between in order to prevent the second objects to move outside the frame 3 during the pallet removal process. The frame 3 might be made of a solid material, e.g. Aluminum or hard plastic or other suitable material. The frame 3 shown in figure 1(a) is only one possible embodiment of a frame according to the present invention. In other embodiments, the frame 3 may have a different shape or different size, e.g. a frame with an oval, circular or hexagonal shape of the inner and/or outer side.

However, the thickness of the frame has to be sufficient in order to prevent the second objects from moving outside the frame during the pallet removal process. In case of heavy objects, the frame should be designed robust, e.g. with a thicker diameter and or made of a robust material, e.g. steel. The supporting tool may comprise a framing 4 on top of the frame 3 in order to prevent second objects from falling out of the frame 3 during depositing the second objects on top of the first objects during the removal process of the second pallet as shown in figure 1 (b) in a side view. The framing 4 is shown as a fence in this embodiment. The framing 4 may have a different shape or design, e.g. a closed sidewall. The framing 4 may be arranged on one or more sides of the frame 3, preferably on each side of the frame 3.

Fig.2 shows a side view of an embodiment of the removal process R with the frame 3 of the supporting tool 1 already in the second position 32 enclosing the second objects 22 on top of the second pallet 2, which is stacked on top of the first objects 21. The first objects are placed on a pallet. In other embodiments, the first objects might be placed on top of the floor indicated by the horizontal line in figure 2 (and the following figures). The frame 3 is ready to support the deposition D of the second objects 22 on top of the first objects 21 during removal R of the second pallet 2 from its position between the first and second objects 21, 22. The pallet will be removed R from a forklift 8 as an embodiment of a pallet remover. The frame 3 is moved M into the second position 32 by suitable means, e.g. by a lift-like means, where the frame is connected to the roof of the storage area. This connection (not shown here) might be established by chains, ropes or vertical rails, which are suitable to move the frame 3 upwards and downwards. An alternative movement M will be shown in the following figures. The supporting tool 1 comprises an initiating means 6 to initiate a motor means (not shown here) to move M the frame 3 at least into the second position 32. In this embodiment the second position 32 of the movable frame 3 is an essentially horizontal position to enable a horizontal removal of the second pallet 2, as indicated by the arrows R. For an efficient, save and easy removal R the frame 3 has a shape adapted to the shape of the second pallet 2, here fully loaded with second objects 22. The essentially vertical framing 4 on top of each side of the frame 3 prevents the second objects 22 from falling beside the frame 3 during pallet removal R. The forklift 8 is equipped with a remote control means 10 sending out a control signal 101 to the initiating means 6 mounted at the framing 4, where the initiating means 6 of the supporting tool 1 is adjusted to initiate the movement of the frame 3 into the second position 32 via motor means (not shown here) in response to the send-out control signal 101. In other embodiments the remote control means 10 might be a handheld device carried by the driver of the forklift or other workers assigned to the processes to be executed.

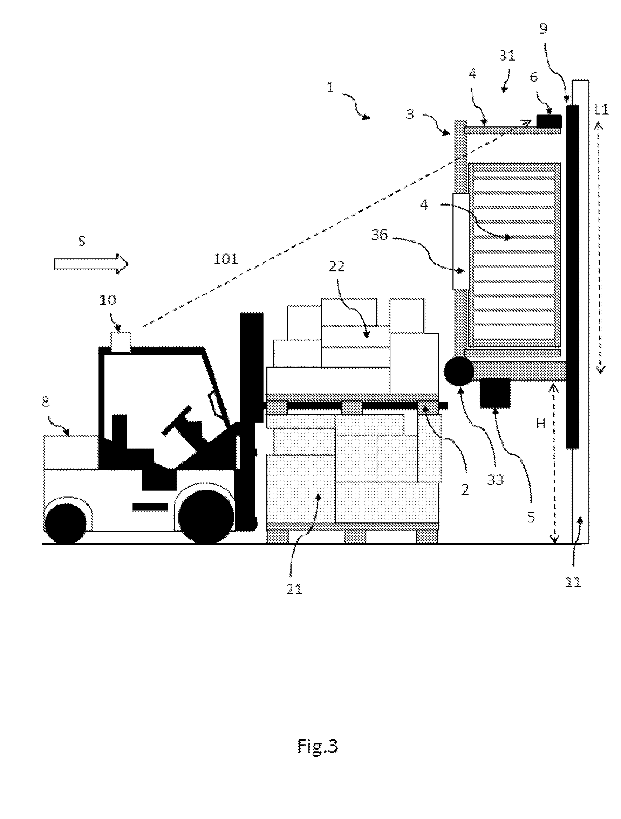

The stacking S of the second pallet 2 loaded with second objects 22 and the application of the supporting tool 1 for the subsequent pallet removal process R is shown in the following figures 3 ― 5. The shown supporting tool 1 is arranged in these examples as a supporting tool 1 with a frame 3 pivotable along a horizontally arranged rotational axis 33 (indicated as a black circle extending perpendicular to the surface of the sheet). On top of the frame, there are framings 4 mounted on each side of the frame 3 in a vertical position relative to the frame and the established empty area EA between its inner sides. The supporting tool 1 is mounted to the wall 11 of the storage area via suitable mounting means 9, e.g. a rail, where the supporting tool can be fixed to at any suitable height H. The wall 11 might be an inner or outer wall of a logistics center, where objects (or goods) are stored. In order to pivot the frame 3 from the first position 31 to another position, e.g. the second position, the supporting tool 1 comprises motor means 5 facilitating the pivoting.

Figure 3 shows the stacking S of the second pallet loaded with the second objects 22 on top of the first objects 21. The first objects are placed on top of another pallet, but might also be placed on top of the bottom floor as indicated by the horizontal line. The stacking S is executed by a forklift 8. To have enough space to stack the second pallet 2, the frame 3 is in the first position 31. Here the frame 3 has a first length L1 being sufficiently large to be able to be pivoted around the second objects 22. This length L1 has to be larger than the required length L2 during the removal process R. Therefore the frame 3 comprises length adapting means 36 at least at the sides of the frame perpendicular to the rotational axis 33. After finished stacking S of the second pallet 2 on top of the first objects 21, the frame 3 will be moved to the second position. To start the movement of the frame 3, the driver of the forklift 8 sends out a control signal 101 by a remote control means 10 to an initiating means 6 mounted at the framing 4, which will start the pivoting of the frame 3 in response to the control signal 101 by triggering the motor means 5.

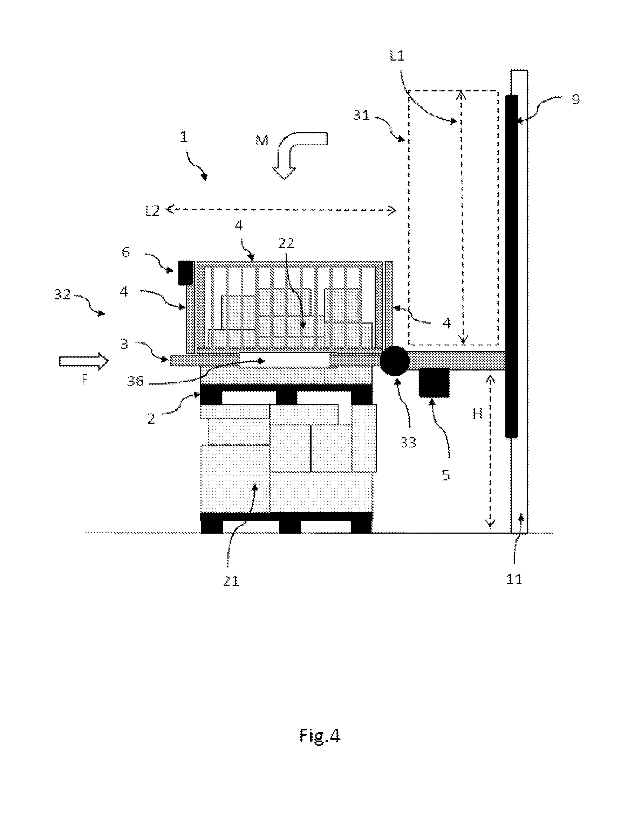

In figure 4, the frame 3 is moved M from its first position 31 (indicated by the dashed area) into the second position 32 enclosing the second objects 22 with the frame 3. After reaching the second position 32, the length of the frame has to be reduced to the second length L2 shorter than the first length L1 in order to close the gap between the inner side 34 of the frame 3 and the second objects 22 on top of the second pallet 2, which is present for a frame 3 with sides having the first length L1. The length reduction from first length L1 to second length L2 can be achieved by applying a force F in a horizontal direction to the front side of the frame 3, which is the side of the frame 3 being parallel to the rotational axis 33. The sides of the frame 3 being variable in length may comprise suitable length adapting means 36, preferably being self-locking.

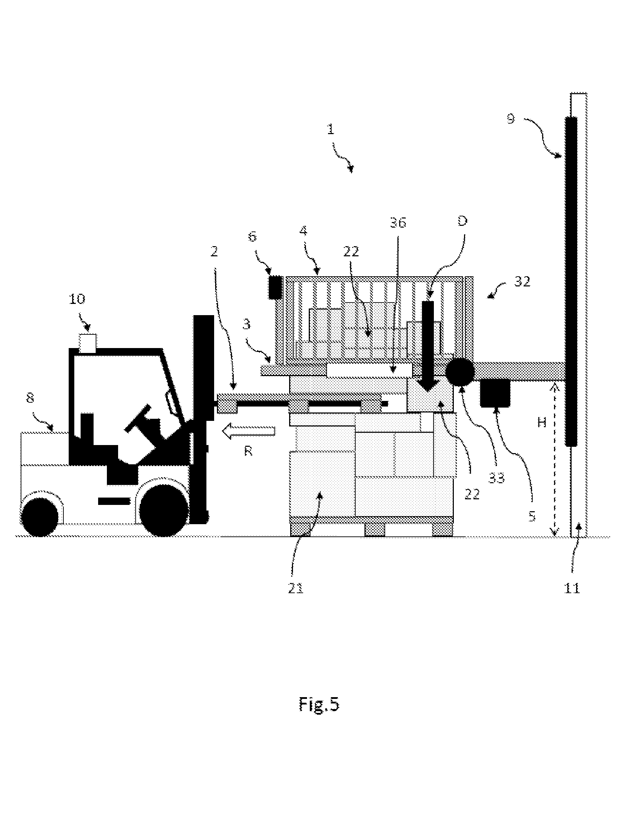

Fig.5 shows the removal R of the second pallet 2 from its position between the first and the second objects 21, 22 with a forklift 8 as an example of a pallet remover. The frame 3 prevents second objects 22 from being moved with the second pallet 2 along the removal direction R. With the area, where no second pallet 2 is present anymore between first and second objects 21, 22 (backside of the stack of objects), the second objects 22 start to drop on top of the first objects 21, also denoted as the deposition D of second objects 22 onto the first objects 21. The deposition D is indicated by the black vertical arrow D. The framing 4 prevents second objects 22 from slipping beside the first objects 21 followed by falling down on the floor. The frame 3 and the framing 4 provide an effective, save and easy deposition D of second objects 22 on top of the first objects 21 underneath the second objects 22. The removed pallet 2 can be used for carrying other objects, which enables an effective use of the present pallets. Subsequently such storage areas will store and carry the same amount of objects with a reduced number of required pallets. Additionally the required height to store the first and second objects 21, 22 is reduced, because the pallet 2 in between first and second objects occupying a certain height is removed.

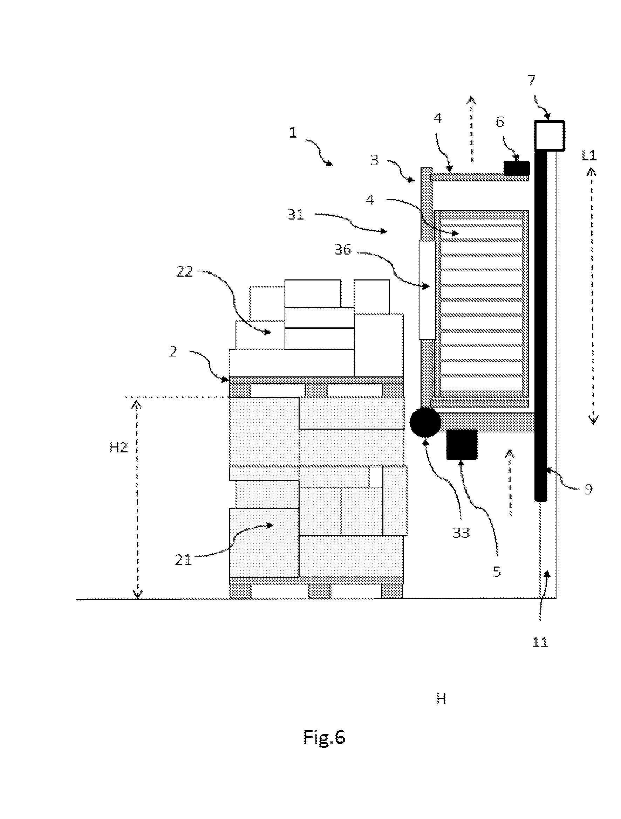

Fig.6 shows another embodiment of a supporting tool 1 according to the present invention. The supporting tool 1 in this example is a tool with a pivotable frame 3 as already shown in figures 3 ― 5. The supporting tool 1 as shown here further comprises height adapting means 7 to adjust the height of the supporting tool 1, especially the height of the rotational axis 33 to the height H2 of the upper surface of the first objects. Since the height H2 determines, at with height the second pallet 2 can be stacked on top of the first objects 21, the height of the second position of the pivotable frame 3 has to be adjusted accordingly. In case of pallets carrying a varying number of first objects, the height H of the supporting tool 1 has to be adapted to the present loading situation, which might vary. The height adapting tool 7 may be a motor to drive vertical chains, where the supporting tool 1 is connected to. The supporting tool 1 may be mounted to vertical rails 9 arranged on a wall 11, where the supporting tool 1 can slight upwards and downwards controlled by the motor driven chains.

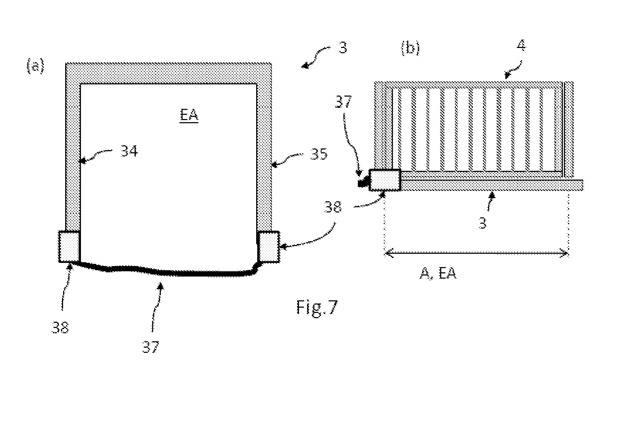

Fig.7 shows another embodiment of the frame according to the present invention in (a) a top view, and (b) in a side view, where the frame comprises a belt 37 at the side of the frame 3, which blocks the second objects 22 (also denotes as front side of the frame). Here the belt 37 extends between the side parts of the frame 3 shaped as a "U" establishing a closed frame 3, where the front side of the frame 3 is flexible in case of a non-stretched belt 37 (as shown in figure 7). The non-stretched belt 37 makes it very easy to move the frame 3 into the second position 22 not requiring side parts of the frame 3 with any telescoping functionality. If the second position 22 can only be reached by modifying the length of the frame 3, the belt 37 can simply be expanded. Therefore the belt 37 is preferably made of a flexible material, e.g. rubber. In a preferred embodiment the frame 3 comprises pulling means 38 suitable to tighten the belt 37 when the frame 3 is in the second position 22. The belt 37 might be tightened automatically when the frame 3 reaches its second position 22 or might be tightened on demand, either by hand or via a remote control. In case of automatically tighten the belt 37 the frame 3 comprises suitable pulling means 38 such as an electrical winch, where the belt 37 is fixed to. Such winches might be arranged in this example on both sides of the belt 37. In a further improved embodiment, the belt 37 will be automatically released after removal of the second pallet 2. The status of a removed second pallet 2 might be signalized to the pulling means 38 via a remote control.

While the invention has been illustrated and described in details in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference sign in the claims should not be construed as limiting the scope.

**List of numerals**
- 1: supporting tool
- 2: second pallet
- 21: first object(s)
- 22: second object(s)
- 3: movable (pivotable) frame
- 31: first position of the frame
- 32: second position of the frame
- 33: rotational axis for the pivotable frame
- 34: inner side of the frame
- 35: outer side of the frame
- 36: length adapting means
- 37: belt
- 38: pulling means
- 4: vertical framing
- 5: motor means
- 6: initiating means
- 7: height adapting means
- 8: pallet remover, e.g. a forklift
- 9: mounting means
- 10: remote control means
- 101: control signal (send out by the remote control means)
- 11: wall
- A: area occupied by the first objects
- D: depositing second objects on top of first objects
- EA: empty area established by the frame
- F: external force
- H: height of the rotational axis

- H2: height of the upper surface of the first objects
- M: moving the frame
- R: removal of the second pallet
- L1: first length of the frame
- L2: second length of the frame
- S: stacking of second pallet loaded with second objects on top of first objects

## Claims

1. A supporting tool (1) enabling removal of pallets (2) from a stack of loaded pallets (2) comprising a frame (3) movable between a first position (31) and a second position (32), where the movable frame (3) is suitably shaped and mounted to enable the stacking (S) of the second pallet (2) loaded with second objects (22) on top of first objects (21) in the first position (31) and to at least partly enclose the second objects (22) in the second position (32) suitable to block the second objects (22) from being removed together with the second pallet (2) during removal (R) of the second pallet (2) from its position between the first and second objects (21, 22) and to deposit (D) the second objects (22) on top of the first objects (21) during removal of the second pallet (2).

2. The supporting tool (1) as claimed in claim 1, **characterized in that** the second position (32) of the movable frame (3) is an essentially horizontal position.

3. The supporting tool (1) as claimed in claim 1 or 2, **characterized in that** the frame (3) has a shape adapted to the shape of the second pallet (2) or to the shape of at least the second objects (22).

4. The supporting tool (1) as claimed in any preceding claim, **characterized in that** at least the side of the frame (3), which blocks the second objects (22), is provided by a belt (37).

5. The supporting tool (1) as claimed in claim 4, **characterized in that** the frame has a U-shape closed with the belt (37), wherein the frame (3) comprises pulling means (38) suitable to tighten the belt (37) when the frame (3) is in the second position (32).

6. The supporting tool (1) as claimed in any preceding claim, further comprising at least one essentially vertical framing (4) on top of the frame (3) preventing the second objects (22) from falling beside the frame (3) on at least one side during pallet removal (R).

7. The supporting tool (1) as claimed in any preceding claim, **characterized in that** the supporting tool (1) comprises motor means (5) in order to move the frame (3) at least between the first and second positions (31, 32).

8. The supporting tool (1) as claimed in claim 7, **characterized in that** the supporting tool (1) comprises initiating means (6) to initiate the motor means (5) to move (M) the frame (3).

9. The supporting tool (1) as claimed in any preceding claim, **characterized in that** the movable frame (3) is pivotable along a rotational axis (33) between the first and the second position (31, 32), where the rotational axis (33) is arranged outside the area (A) occupied by the first objects (21) in a suitable height (H).

10. The supporting tool (1) as claimed in claim 8, **characterized in that** the rotational axis (33) is arranged to be adaptable to the height (H2) of the first objects (21) applying height adapting means (7).

11. The supporting tool (1) as claimed in claim 9 or 10, **characterized in that** the frame (3) has a variable length perpendicular to the rotational axis (33) with a first length (L1) in the first position (31) and a second length (L2) adjustable in the second position (32) with the first length (L1) being larger than the second length (L2), preferably the second length (L2) is adjusted by an external force (F).

12. A pallet removal system comprising at least one supporting tool (1) as claimed in claim 1, which is mounted to suitable mounting means (9) at the suitable height (H) to enable the stacking (S) of the second pallet (2) loaded with second objects (22) on top of first objects (21) and at least one pallet remover (8) suitable to remove (R) the second pallet (2) from its position between the first and the second objects (21, 22).

13. The pallet removal system as claimed in claim 12, **characterized in that** the pallet removal system comprises at least one remote control means (10) suitable to send out a control signal (101) to the supporting tool (1), where the supporting tool (1) is adjusted to move the frame (3) in response to the control signal (101).

14. A method to operate the pallet removal system as claimed in claim 12 comprising at least one supporting tool (1) as claimed in claim 1 comprising the steps of:
- stacking (S) the second pallet (2) loaded with the second objects (22) on top of the first objects (21);
- moving (M) the frame (3) into a second position (32) to at least partly enclose the second objects (22) with the frame (3);
- removing (R) the second pallet (2) from its position between the first and the second objects (21, 22) with a pallet remover (8); and
- depositing (D) the second objects (22) on top of the first objects (21) during removing (R) the second pallet (2).

15. The method as claimed in claim 14, **characterized in that** the pallet remover (8) is a forklift comprising fixation means in order to provide a tight fit between the forklift (8) and the second pallet (2) at least during removing (R) the second pallet (2).
